# EUROPÄISCHE PATENTANMELDUNG

(11) **EP 3 412 545 A1**
(43) Veröffentlichungstag der Anmeldung: **12.12.2018**
(21) Anmeldenummer: 18170658.1
(22) Anmeldetag: 03.05.2018
(51) Int. Cl.: B62J 11/00, B62H 5/00, E05B 71/00

(54) **HALTERUNG FÜR EIN ZWEIRAD-SCHLOSS**

(30) Priorität: 09.06.2017 DE 102017112766
(71) Anmelder: ABUS August Bremicker Söhne KG, 58300 Wetter-Volmarstein (DE)
(72) Erfinder:
(74) Vertreter: Manitz Finsterwald Patentanwälte PartmbB

(57) **Zusammenfassung**

Eine Halterung für ein Zweirad-Schloss vom Typ eines Faltschlosses umfasst einen Träger, der sich entlang einer Längsachse erstreckt und eine Befestigungseinrichtung zur Befestigung des Trägers an einem Rohrabschnitt eines Zweirads aufweist, wobei der Träger einen Aufnahmebereich zum Aufnehmen des Zweirad-Schlosses begrenzt, und einen Fixierbügel, der an dem Träger zwischen einer Offenstellung und einer Geschlossenstellung schwenkbar gelagert ist, wobei der Fixierbügel dazu ausgebildet ist, in der Geschlossenstellung das Zweirad-Schloss in dem Aufnahmebereich festzulegen. Der Fixierbügel weist wenigstens einen Federabschnitt auf, der dazu ausgebildet ist, in der Geschlossenstellung des Fixierbügels eine Andruckkraft auf das Schloss auszuüben.

## Beschreibung

Die vorliegende Erfindung betrifft eine Halterung für ein Zweirad-Schloss vom Typ eines Faltschlosses, mit einem Träger, der sich entlang einer Längsachse erstreckt und eine Befestigungseinrichtung zur Befestigung des Trägers an einem Rohrabschnitt eines Zweirads aufweist, wobei der Träger einen Aufnahmebereich zum Aufnehmen des Zweirad-Schlosses begrenzt, und ferner mit einem Fixierbügel, der an dem Träger zwischen einer Offenstellung und einer Geschlossenstellung schwenkbar gelagert ist, wobei der Fixierbügel dazu ausgebildet ist, in der Geschlossenstellung das Zweirad-Schloss in dem Aufnahmebereich festzulegen.

Derartige Faltschlösser dienen beispielsweise zum Sichern eines Zweirads an einem Fahrradständer, einem Laternenpfosten oder dergleichen. Hierfür umfasst das Faltschloss einen Schlosskörper und einen daran befestigten Gelenkstabbügel, welcher mehrere schwenkbar miteinander verbundene Gelenkstäbe aufweist, die zu einer achsparallelen Anordnung zusammenfaltbar sind. Für den Gebrauch des Faltschlosses werden die Gelenkstäbe auseinandergefaltet, um eine offene Schlaufe zu bilden, welche beispielsweise einen Rahmenabschnitt des Zweirads und den Fahrradständer, Laternenpfosten oder dergleichen umgreifen kann. Um das Zweirad gegen unbefugte Verwendung zu sichern, wird sodann die Schlaufe geschlossen, und ein freies Ende der Schlaufe bzw. des Gelenkstabbügels wird an dem Schlosskörper verriegelt.

Für den Transport des Faltschlosses durch den befugten Benutzer während einer Fahrt mit dem Zweirad können die Gelenkstäbe nach einem Entriegeln des Faltschlosses zu einer kompakten Anordnung (so genannte Zollstockkonfiguration) zusammengefaltet werden. In dieser Konfiguration kann das Faltschloss in der Halterung aufgenommen werden. Üblicherweise werden derartige Halterungen an einem Rohrabschnitt des Rahmens, des Gepäckträgers oder des Sattelrohrs des Zweirads befestigt.

Ein beispielhaftes Faltschloss ist aus der DE 10 2005 040 066 B4 bekannt. Die DE 20 2005 013 390 U1 beschreibt eine Tasche für ein Faltschloss.

Sofern die Halterung mit einem schwenkbaren Fixierbügel ausgestattet ist, ergibt sich für den Benutzer eine einfache Bedienung und intuitiv eingängliche Handhabung der Halterung, da der Fixierbügel lediglich in die Geschlossenstellung geschwenkt werden muss, um das Zweirad-Schloss in dem Aufnahmebereich der Halterung festzulegen. Eine besonders einfache Handhabung ergibt sich hierbei, wenn zum Beibehalten der Geschlossenstellung des Fixierbügels ein freies Ende des Fixierbügels mittels einer Rasteinrichtung an dem Träger arretierbar, d.h. lagefixierbar ist. Allerdings sollte hierbei gewährleistet sein, dass die Rastverbindung zuverlässig beibehalten wird, insbesondere auch bei Erschütterungen während der Fahrt mit dem Zweirad.

Nachteilig ist es, wenn das in der Halterung aufgenommene Zweirad-Schloss, etwa wegen eines seitlichen Spiels aufgrund von Fertigungstoleranzen, während der Fahrt mit dem Zweirad aufgrund der hierbei auftretenden Erschütterungen innerhalb der Halterung hin- und herschlägt. Dies kann zu unerwünschten Geräuschen oder Abnutzungen des Zweirad-Schlosses führen.

Es ist eine Aufgabe der Erfindung, eine Halterung für ein Zweirad-Schloss vom Typ eines Faltschlosses, anzugeben, welche die vorgenannten Nachteile beseitigt und insbesondere einfach zu handhaben ist.

Diese Aufgabe wird durch eine Halterung mit den Merkmalen des Anspruchs 1 gelöst, und insbesondere dadurch, dass der Fixierbügel wenigstens einen Federabschnitt aufweist, welcher dazu ausgebildet ist, in der Geschlossenstellung des Fixierbügels eine Andruckkraft auf das Zweirad-Schloss auszuüben.

Bei dieser Halterung für ein Zweirad-Schloss ist demnach ein schwenkbarer Fixierbügel mit mindestens einem Federabschnitt ausgebildet. Durch den Federabschnitt wird eine Geschlossenstellung des Fixierbügels mit einer Andruckkraft ermöglicht, die zwischen dem Fixierbügel und dem im Aufnahmebereich der Halterung befindlichen Zweirad-Schlosses wirksam ist. Diese Andruckkraft und insbesondere auch die zwischen dem Zweirad-Schlosses und dem Träger erzeugte Gegenkraft (Reaktionskraft) sowie die hierdurch in seitlicher Richtung wirksamen Reibungskräfte verbessern die Fixierung des Zweirad-Schlosses in dem Aufnahmebereich. Durch Ausbildung eines Federabschnitts kann auch ein mögliches Spiel bei nicht passgenauen Schlössern in dem Aufnahmebereich der Halterung beseitigt werden. Durch eine verbesserte Fixierung des Zweirad-Schlosses werden sowohl der Zweirad-Fahrer als auch das Zweirad-Schloss geschützt. Zum einen wird einem möglichen Herausfallen des Zweirad-Schlosses bei möglicherweise auftretenden Erschütterungen während der Fahrt entgegengewirkt. Zum anderen wird das Zweirad-Schloss selbst vor Verschleiß, insbesondere aufgrund einer Hin- und Herbewegung innerhalb des Aufnahmebereichs durch ein mögliches Spiel, geschützt. Eine unerwünschte Geräuschbildung durch "Klappern" des Zweirad-Schlosses bzw. seiner Komponenten wird wirksam unterbunden.

Besonders vorteilhaft ist das Vorsehen eines derartigen Federabschnitts insbesondere, wenn der Fixierbügel zwischen der Offenstellung und der Geschlossenstellung frei schwenkbar an dem Träger gelagert ist, beispielsweise mittels eines nachstehend noch genannten Scharniers. Hierdurch erfolgt erst beim endgültigen Schließen des Fixierbügels, d.h. beim endgültigen Erreichen der Geschlossenstellung, ein Spannen des Federabschnitts, um die erläuterte Andruckkraft zum Fixieren des Zweirad-Schlosses zu erzeugen. Der Fixierbügel kann somit zunächst im Wesentlichen kräftefrei - und insbesondere mit nur einer Hand - in Richtung der Geschlossenstellung bewegt werden, wobei der Benutzer erst beim endgültigen Schließen des Fixierbügels die erläuterte Andruckkraft erzeugt und hierdurch auch eine haptische Rückmeldung über das Erreichen der Geschlossenstellung erhält.

Weiterhin ist das Vorsehen eines Federabschnitts an dem Fixierbügel insbesondere dann besonders vorteilhaft, wenn der Fixierbügel an seinem freien Ende mittels einer Rasteinrichtung in seiner Geschlossenstellung an dem Träger gesichert wird, wie nachstehend noch erläutert wird. Die durch den Federabschnitt zwischen dem Fixierbügel und dem Zweirad-Schloss erzeugte Andruckkraft kann hierbei als Gegenkraft an der Rasteinrichtung wirksam sein, um dort einen besonderes zuverlässigen Rastschluss (zwischen Rastelement und Gegenelement) zu bewirken.

Gemäß einer Ausführungsform ist der Fixierbügel quer zu der Längsachse des Trägers ausgerichtet. Durch den Fixierbügel in Querrichtung wird das Zweirad-Schloss in der Geschlossenstellung des Fixierbügels in dem Aufnahmebereich gehalten und insbesondere in seitlicher Richtung gegen ein Verlassen des Aufnahmebereich (z.B. durch ein Herauskippen) gesichert. Durch die zur Erstreckungsrichtung des Trägers senkrechte Erstreckungsrichtung des Fixierbügels wird die Bewegungsfreiheit senkrecht zur Längsachse des Trägers begrenzt.

Gemäß einer Ausführungsform ist der Federabschnitt rückfedernd ausgebildet. Bei einer elastischen Verformung des Federabschnitts kann somit eine Rückstellkraft hervorgerufen werden, um die erläuterte Andruckkraft auf das Zweirad-Schloss zu erzeugen. Aufgrund der rückfedernden Eigenschaft des Federabschnitts kann also die Andruckkraft auf das sich im Aufnahmebereich befindliche Zweirad-Schloss ausgeübt werden. Durch den rückfedernden Federabschnitt ist somit eine stabile und sichere Fixierung des Schlosses möglich.

Der Federabschnitt kann insbesondere in einer Richtung rückfedernd ausgebildet sein, die quer (vorzugsweise senkrecht) zu der Erstreckungsrichtung des Federabschnitts verläuft.

Insbesondere kann der Fixierbügel selbst, oder ein Teil des Fixierbügels (insbesondere der noch genannte Basisabschnitt), den Federabschnitt bilden, wobei der Fixierbügel bzw. der den Federabschnitt bildende Teil des Fixierbügels rückfedernd ausgebildet ist.

Gemäß einer Ausführungsform kann der Federabschnitt bezüglich der Erstreckungsrichtung des Fixierbügels schräg ausgerichtet sein. Der Federabschnitt kann hierdurch über die Erstreckungsebene des Fixierbügels in der Umgebung des Federabschnitts überstehen, insbesondere in Richtung des Aufnahmebereichs für das Zweirad-Schloss (bezogen auf die Geschlossenstellung des Fixierbügels). Die Ausrichtung des Federabschnitts lässt sich bezüglich der Erstreckungsrichtung des Fixierbügels bei dieser Ausführungsform durch einen spitzen Winkel definieren. Durch eine schräge Ausrichtung des Federabschnitts relativ zu dem Fixierbügels (zumindest in der Umgebung des Federabschnitts) wird die Fixierung eines Zweirad-Schlosses im Aufnahmebereich, aufgrund der dadurch erhöhten Andruckkraft, verbessert.

Insbesondere kann der Federabschnitt bezüglich der Erstreckungsrichtung des Fixierbügels in Richtung des Aufnahmebereichs für das Zweirad-Schloss geneigt sein. Durch die Neigung des Federabschnitts in Richtung des Aufnahmebereichs wird die Entstehung der Andruckkraft durch erhöhten Druck auf das Zweirad-Schloss unterstützt.

Gemäß einer Ausführungsform ist der Federabschnitt an dem Fixierbügel integral, d.h. stoffschlüssig einteilig, ausgebildet. Hierdurch kann der Federabschnitt auf besonders einfache Weise hergestellt werden, da keine separate Fertigung oder Befestigung des Federabschnitts erforderlich ist. Ferner wird hierdurch einem möglichen Verschleiß durch Reibung einzelner Komponenten im Federabschnitt entgegengewirkt. Zusätzlich wird eine stetige, rückfedernde Wirkung des Federabschnitts ermöglicht, da sich keinerlei Befestigungsmittel (bspw. Schrauben, Federelemente) lockern oder lösen können.

Gemäß einer Ausführungsform ist der Federabschnitt durch eine mehrseitige Freistellung an dem Fixierbügel ausgebildet. Durch eine teilumfängliche Freistellung des Federabschnitts ist es dem Federabschnitt möglich, sich zur Anpassung an die Geometrie eines Zweirad-Schlosses zu verformen, ohne die Fixierfunktion des Fixierbügels zu beeinträchtigen.

Insbesondere kann der Federabschnitt zungenförmig ausgebildet sein. Durch eine solche Form des Federabschnitts wird eine zuverlässige Fixierung des aufgenommenen Zweirad-Schlosses, bei gleichzeitig geringer Verformung und geringem Verschleiß, erzielt. Zusätzlich erleichtert die, im Vergleich zu einer komplexen Form, einfache Form die Herstellung des Federabschnitts und damit des gesamten Fixierbügels.

Gemäß einer weiteren Ausführungsform weist der Fixierbügel einen Stegabschnitt auf, wobei der Federabschnitt von dem Stegabschnitt in Richtung des Aufnahmebereichs für das Zweirad-Schloss absteht. Der Stegabschnitt kann somit den freistehenden Federabschnitt mit dem Fixierbügel verbinden und hierdurch eine Ausrichtung des Federabschnitts in Richtung des Aufnahmebereichs für das Zweirad-Schloss ermöglichen. Die Erstreckungsebene des Stegabschnitts kann dabei (bezogen auf die Geschlossenstellung des Fixierbügels) insbesondere parallel zu der Erstreckungsebene des Trägers verlaufen. Da der Federabschnitt zu dem Aufnahmebereich hin absteht, wird eine erhöhte Andruckkraft auf das sich im Aufnahmebereich befindliche Zweirad-Schloss ermöglicht. Durch den Stegabschnitt kann zudem die Freistellung des Federabschnitts realisiert werden.

Gemäß einer Ausführungsform weist der Fixierbügel zwei Federabschnitte auf. Hierbei können die beiden Federabschnitte insbesondere in einem zentralen Bereich des Fixierbügels miteinander verbunden sein. Die beiden Federabschnitte und deren Freistellung können insbesondere mit Hilfe des vorstehend genannten Stegabschnitts realisiert sein. Der Stegabschnitt ist dabei, bezogen auf die Erstreckungslänge des Fixierbügels, vorzugsweise mittig platziert und trennt somit die beiden Federabschnitte voneinander. Durch die Verwendung von zwei Federabschnitten kann eine noch zuverlässigere Fixierung des im Aufnahmebereich befindlichen Zweirad-Schlosses erreicht werden.

Gemäß einer Ausführungsform weisen die zwei Federabschnitte - abgesehen von einer Schrägstellung in Richtung des Aufnahmebereichs für das Zweirad-Schloss - in zueinander zumindest im Wesentlichen entgegengesetzte Richtungen. Durch die unterschiedlichen Richtungen der Federabschnitte wird eine gegenseitige Beeinträchtigung der Andruckkräfte durch die Federabschnitte unterbunden, und die Federabschnitte können an unterschiedlichen Stellen des Zweirad-Schlosses angreifen.

Gemäß einer Ausführungsform ist der Fixierbügel senkrecht zu seiner Erstreckungsrichtung, nicht jedoch entlang seiner jeweiligen Erstreckungsrichtung elastisch. Dies bedeutet, dass ein jeweiliger Abschnitt des Fixierbügels zwar rückfedernd verbogen, nicht jedoch entlang seiner Längserstreckung elastisch auseinandergezogen werden kann. Dies gilt insbesondere auch für mehrere, in verschiedene Richtung weisende Abschnitte des Fixierbügels, beispielsweise wenn der Fixierbügel im Wesentlichen U-förmig ist, wobei in diesem Fall die U-Form insgesamt (durch Verbiegen der einzelnen Abschnitte relativ zueinander) eine gewisse Längenelastizität aufweisen kann. Eine derartige eingeschränkte Elastizität des Fixierbügels kann die Handhabung des Fixierbügels vereinfachen. Insbesondere kann vorgesehen sein, dass der Fixierbügel für das Verbringen in die Geschlossenstellung nicht mit einem unerwünscht hohen Kraftaufwand längengedehnt werden muss. Eine Elastizität des Fixierbügels in seitlicher Richtung kann jedoch ein kraftschlüssiges Fixieren des Zweirad-Schlosses in dem Aufnahmebereich des Trägers mittels des genannten Federabschnitts ermöglichen oder unterstützen.

Gemäß einer Ausführungsform ist der Fixierbügel oder ein Teil des Fixierbügels (insbesondere der noch genannte Basisabschnitt), bezüglich des Aufnahmebereichs für das Zweiradschloss konvex gewölbt. Durch eine konvexe Wölbung kann die Andruckkraft des Federabschnitts auf das in dem Aufnahmebereich befindliche Zweirad-Schloss erzeugt werden (insbesondere wenn der genannte Federabschnitt durch den Fixierbügel selbst oder einen Teil hiervon gebildet wird) oder unterstützt werden (insbesondere wenn der genannte Federabschnitt an dem konvex gewölbten Teil des Fixierbügels angeordnet ist). Bei dieser Ausführungsform ist der konvex gewölbte Fixierbügel bzw. Teil des Fixierbügels vorzugsweise in einer Richtung senkrecht zu seiner Erstreckungsrichtung elastisch.

Gemäß einer Ausführungsform umschließt der Fixierbügel in der Geschlossenstellung den Aufnahmebereich für das Zweirad-Schloss umfänglich. Die Umfangsrichtung des Aufnahmebereichs bezieht sich in diesem Zusammenhang insbesondere auf die genannte Längsachse des Trägers, d.h. der genannte Umfang erstreckt sich zumindest im Wesentlichen entlang einer Orthogonalebene zu der Längsachse des Trägers. Durch den entlang des gesamten Umfangs geschlossenen Aufnahmebereich wird eine Sicherung des Zweirad-Schlosses vor seitlichem Herausfallen oder -kippen geschaffen.

Gemäß einer weiteren Ausführungsform ist der Fixierbügel im Wesentlichen U-förmig, wobei der Fixierbügel einen Basisabschnitt aufweist, der zwischen zwei Schenkelabschnitten angeordnet ist. Durch die U-förmige Ausbildung des Fixierbügels ist eine optimale Umschließung des typischerweise quaderförmigen Aufnahmebereichs möglich. Hierdurch kann das Zweirad-Schloss fest fixiert und gegen ein seitliches Verlassen des Aufnahmebereichs gesichert werden. Der oder die Federabschnitt(e) ist/sind vorzugsweise an dem Basisabschnitt vorgesehen.

Gemäß einer Ausführungsform ist der Fixierbügel zumindest im Wesentlichen formstabil ausgebildet. Durch die Formstabilität des Fixierbügels wird im Vergleich zu nicht formstabilen Fixierbügeln (beispielsweise einer aus einem Elastomer hergestellten Lasche) eine vereinfachte Handhabung ermöglicht, da der Benutzer keine zusätzliche Kraft (und gegebenenfalls Gegenkraft zum Abstützen) aufbringen muss, um beim Schließen des Fixierbügels die Form des Fixierbügels an den Umriss des Zweirad-Schlosses anzupassen.

Gemäß einer vorteilhaften Ausführungsform ist der Fixierbügel mittels wenigstens eines Scharniers an dem Träger schwenkbar gelagert. Durch die schwenkbare Lagerung des Scharniers ist ein einfaches und insbesondere einhändiges Öffnen und Schließen des Fixierbügels möglich. Insbesondere ist hierdurch eine freie Schwenkbarkeit des Fixierbügels möglich, wobei der Fixierbügel zunächst im Wesentlichen kräftefrei in Richtung der Geschlossenstellung bewegt wird und der Benutzer erst beim endgültigen Schließen des Fixierbügels den genannten Federabschnitt gegen das Zweirad-Schloss spannt und hierbei die erläuterte Andruckkraft erzeugt.

Gemäß einer Ausführungsform kann das Scharnier einen zylindrischen Scharnierstift des Trägers aufweisen. Durch den zylindrischen Scharnierstift wird die Bewegung des Fixierbügels in die Offen- oder Geschlossenstellung ermöglicht. Im Gegensatz beispielsweise zu einer stoffschlüssig angeformten Lasche oder zu einem Kugelgelenk werden durch den zylindrischen Scharnierstift weniger Freiheitsgrade in der Bewegung des Fixierbügels erreicht. Hierdurch resultiert nur eine einzige Schwenkachse für die Bewegung des Fixierbügels, woraus eine einfache, intuitive und verschleißarme Handhabung mit wenigen Verkantungsmöglichkeiten des Fixierbügels ermöglicht wird. Das Scharnier kann ferner eine Scharnierklammer des Fixierbügels umfassen, die an einem Ende des Fixierbügels vorgesehen ist (im Folgenden auch als Scharnierende bezeichnet) und den Scharnierstift des Trägers teilumfänglich umgreift.

Gemäß einer Ausführungsform ist der Fixierbügel um eine Schwenkachse schwenkbar, welche parallel zu der Längsachse des Trägers verläuft.

Gemäß einer weiteren Ausführungsform weist der Fixierbügel ein freies Ende auf (im Folgenden auch als Verschlussende bezeichnet), welches mittels einer Rasteinrichtung an dem Träger einrastbar ist, um den Fixierbügel in seiner Geschlossenstellung an dem Träger zu arretieren. Durch das Vorsehen einer Rasteinrichtung ist ein einfaches und insbesondere einhändiges Öffnen und Schließen des Fixierbügels möglich. Durch die Rasteinrichtung wird der Fixierbügel fest fixiert und das Zweirad-Schloss sicher im Aufnahmebereich der Halterung festgelegt. Durch die Rasteinrichtung bleibt der Fixierbügel bei einer Fahrt auf dem Zweirad geschlossen. Die genannte Andruckkraft, die durch den Federabschnitt des Fixierbügels zwischen dem Fixierbügel und dem im Aufnahmebereich der Halterung befindlichen Zweirad-Schloss erzeugt wird, kann hierbei als Gegenkraft an der Rasteinrichtung wirksam sein, um dort einen besonderes zuverlässigen Rastschluss zu bewirken.

Gemäß einer vorteilhaften Ausführungsform weist der Fixierbügel wenigstens ein Scharnierende (das insbesondere dem genannten Scharnier zugeordnet ist) und ein Verschlussende auf (das insbesondere dem genannten freien Ende des Fixierbügels entspricht). Der Träger kann hierbei beiderseits des Aufnahmebereichs für das Zweirad-Schloss einen ersten Verbindungsabschnitt und einen zu dem ersten Verbindungsabschnitt gleichartigen zweiten Verbindungsabschnitt aufweisen. Bei dieser Ausführungsform kann der Fixierbügel wahlweise in einer ersten Konfiguration oder in einer zweiten Konfiguration an dem Träger befestigt werden. In der ersten Konfiguration ist das Scharnierende des Fixierbügels an dem ersten Verbindungsabschnitt des Trägers befestigt und ist das Verschlussende des Fixierbügels an dem zweiten Verbindungsabschnitt des Trägers arretierbar (für die Geschlossenstellung des Fixierbügels). In der zweiten Konfiguration ist das Scharnierende des Fixierbügels an dem zweiten Verbindungsabschnitt des Trägers befestigt und ist das Verschlussende an dem ersten Verbindungsabschnitt arretierbar (für die Geschlossenstellung des Fixierbügels). Die genannten Verbindungsabschnitte des Trägers fungieren somit wahlweise entweder als Scharnierelement oder als Rastelement. An dem jeweiligen Verbindungsabschnitt des Trägers kann also wahlweise das Scharnierende befestigt oder das Verschlussende des Fixierbügels in dessen Geschlossenstellung arretiert werden, wobei die jeweilige Befestigung bzw. Arretierung (mit unterschiedlichem Kraftaufwand und/oder in unterschiedlicher Winkelstellung des Fixierbügels) lösbar ist. Durch die einfache Möglichkeit eines solchen Umkonfigurierens des Fixierbügels kann der Mechanismus des Öffnens und Schließens beispielsweise an Links- oder Rechtshänder angepasst werden. Des Weiteren kann die Öffnungs- und Schließrichtung des Fixierbügels auch an andere Umstände angepasst werden, beispielsweise die Parkposition des Zweirads in einem Kellerabteil.

Die Erfindung bezieht sich auch unabhängig von dem Vorhandensein des genannten Federabschnitts auf eine Halterung für ein Zweirad-Schloss vom Typ eines Faltschlosses mit einem Träger, der sich entlang einer Längsachse erstreckt und eine Befestigungseinrichtung zur Befestigung des Trägers an einem Rohrabschnitt eines Zweirads aufweist, wobei der Träger einen Aufnahmebereich zum Aufnehmen des Zweirad-Schlosses begrenzt, und mit einem Fixierbügel, der an dem Träger zwischen einer Offenstellung und einer Geschlossenstellung schwenkbar gelagert ist, wobei der Fixierbügel dazu ausgebildet ist, in der Geschlossenstellung das Zweirad-Schloss in dem Aufnahmebereich festzulegen, wobei die Öffnungs- und Schließrichtung des Fixierbügels in der vorstehend erläuterten Weise (also durch Vorsehen zweier gleichartiger Verbindungsabschnitte des Trägers und entsprechende Ausgestaltung des Fixierbügels) umkonfigurierbar ist.

Gemäß einer Ausführungsform weist der Träger ein Stützelement auf, welches dazu ausgebildet ist, das in dem Aufnahmebereich aufgenommene Zweirad-Schloss gegen eine Bewegung entlang der Längsachse des Trägers abzustützen. Das Stützelement kann dabei den Aufnahmebereich insbesondere nach unten begrenzen, um etwa ein Durchrutschen des Zweirad-Schlosses durch den Aufnahmebereich zu verhindern, und/oder nach oben begrenzen, um etwa ein Herausspringen des Zweirad-Schlosses während der Fahrt aufgrund einer Erschütterung zu verhindern. Ein derartiges Stützelement kann auch dazu dienen, das in den Aufnahmebereich der Halterung eingesetzte Zweirad-Schloss in der Offenstellung des Fixierbügels vorläufig zu positionieren, bis der Fixierbügel geschlossen wird.

Gemäß einer Ausführungsform steht das Stützelement bezüglich der Längsachse des Trägers seitlich ab, um das Zweirad-Schloss an einer Stirnseite abzustützen oder um in eine Aussparung des Zweirad-Schlosses einzugreifen.

Gemäß einer weiteren Ausführungsform ist das Stützelement mit dem Träger zumindest im Wesentlichen starr verbunden und insbesondere integral mit dem Träger ausgebildet.

Der Träger der Halterung kann in einem unteren Bereich eine Lagerschale aufweisen, die einen Boden, eine Vorderwand und zwei Seitenwände aufweist, wobei die zwei Seitenwände relativ zu der Vorderwand weiter nach oben reichen, um für eine hohe seitliche Stabilität des gehaltenen Zweirad-Schlosses sorgen, und wobei der Boden der Lagerschale das genannte Stützelement bildet.

Was weiterhin den Träger der Halterung betrifft, so kann dieser eine Platte aufweisen, die sich entlang der genannten Längsachse erstreckt.

Gemäß einer vorteilhaften Ausführungsform weist der Träger an seiner Rückseite eine Anlegeplatte auf, die aus einem weicheren Material besteht als der Träger. Hierdurch kann ein verbessertes Anliegen des Trägers an dem Rohrabschnitt des Zweirads erreicht werden, wobei die Anlegeplatte insbesondere einen (relativ zu dem Träger) erhöhten Reibungskoeffizienten aufweisen und/oder eine Dämpfung bewirken kann. Die Anlegeplatte kann an dem Träger lösbar befestigt oder mit dem Träger integral ausgebildet sein (beispielsweise als sogenanntes 2K-Spritzgießteil).

Der Träger oder die genannte Anlegeplatte kann an der Rückseite einen konkaven Querschnitt aufweisen, um einen verbesserten Formschluss mit dem Rohrabschnitt des Zweirads zu erreichen.

Die genannte Befestigungseinrichtung des Trägers kann beispielsweise mehrere entlang der Längsachse des Trägers verteilte Befestigungsöffnungen zum Durchführen von Schrauben und/oder seitliche Schlitze zum Durchführen eines Befestigungsbands (z.B. mit einem Klettverschlusselement) aufweisen.

Die Halterung kann generell aus einem verschleißfesten Polymer gefertigt werden.

Die Erfindung bezieht sich auf eine Schlossanordnung mit einer Halterung nach einer der vorgenannten Ausführungsformen und mit einem Zweirad-Schloss vom Typ eines Faltschlosses, wobei das Zweirad-Schloss einen Schlosskörper und einen daran befestigten Gelenkstabbügel aufweist, welcher mehrere schwenkbar miteinander verbundene Gelenkstäbe aufweist, die zu einer achsparallelen Anordnung zusammenfaltbar sind.

Die Erfindung wird nachfolgend lediglich beispielhaft unter Bezugnahme auf die Zeichnungen erläutert. Gleiche oder gleichartige Elemente sind darin mit denselben Bezugszeichen gekennzeichnet.
Fig. 1 zeigt eine Perspektivansicht einer Halterung für ein Zweirad-Schloss mit einem Fixierbügel in der Geschlossenstellung von schräg vorne.
Fig. 2 und Fig. 3 zeigen eine Vorder- und Seitenansicht der Halterung mit dem Fixierbügel in der Geschlossenstellung.
Fig. 4 zeigt eine Perspektivansicht der Halterung mit dem Fixierbügel in der Offenstellung von schräg vorn.
Fig. 5 zeigt eine Perspektivansicht der Halterung mit darin aufgenommenem Zweirad-Schloss von schräg vorn.
Fig. 6 zeigt eine Perspektivansicht einer weiteren Ausführungsform einer Halterung für ein Zweirad-Schloss von schräg vorn.

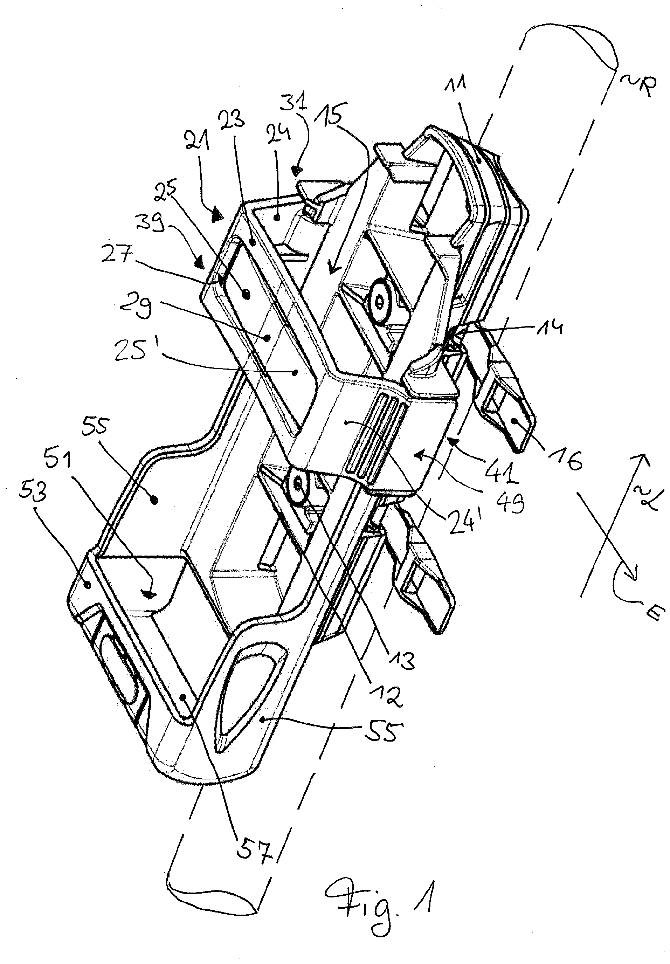

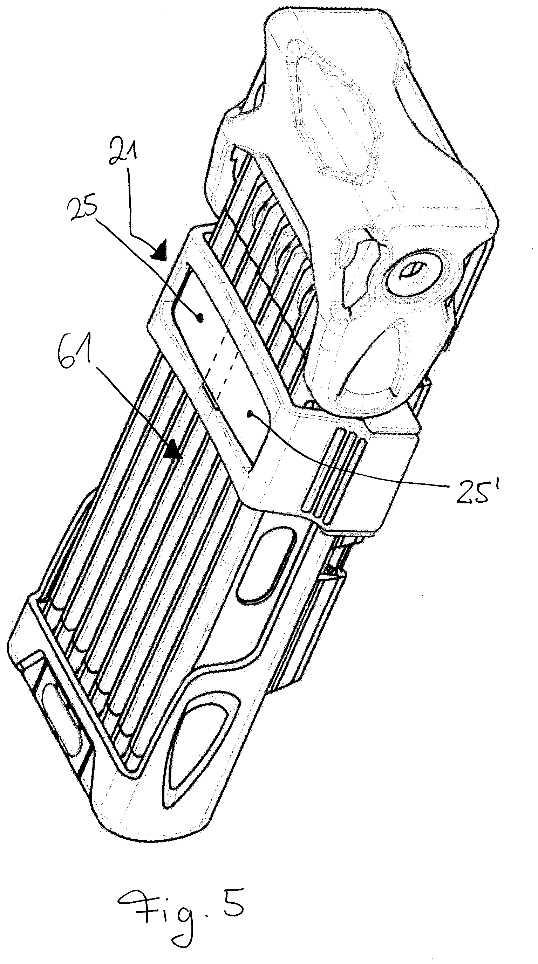

Die Fig. 1 bis 5 zeigen verschiedene Ansichten einer Halterung für ein Zweirad-Schloss 61 (Fig. 5) vom Typ eines Faltschlosses. Ein solches Faltschloss umfasst üblicherweise einen Schlosskörper und einen daran befestigten Gelenkstabbügel, welcher mehrere schwenkbar miteinander verbundene Gelenkstäbe aufweist, die zu einem kompakten Paket zusammengefaltet werden können. Hierdurch ergeben sich für das Zweirad-Schloss 61 und insbesondere den Gelenkstabbügel im Wesentlichen quaderförmige Ausmaße mit zwei Schmalseiten und zwei Breitseiten entlang des Umfangs.

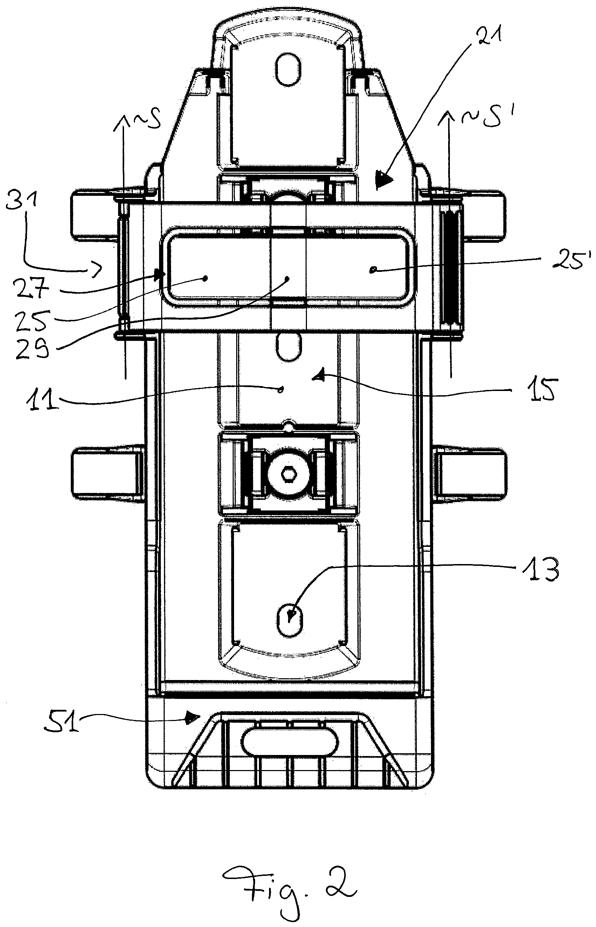

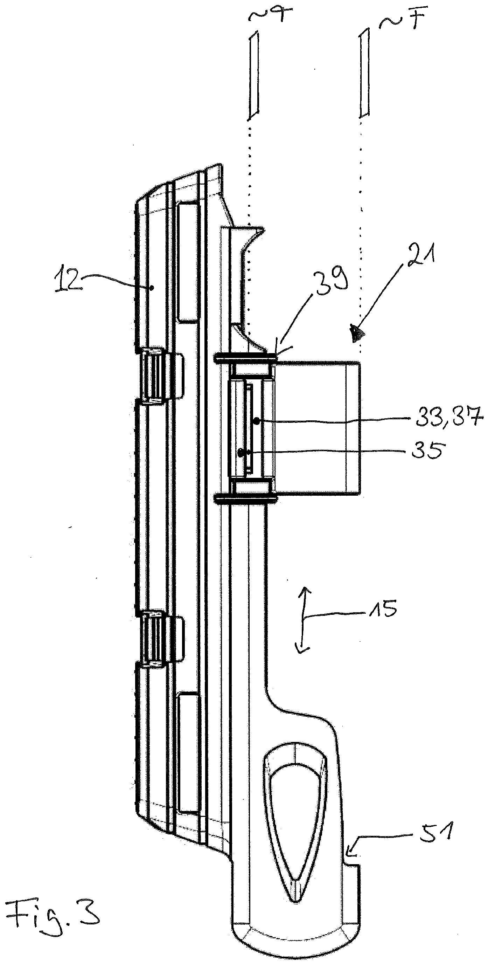

Die Halterung für das Zweirad-Schloss 61 umfasst einen als Grundplatte dienenden Träger 11, der sich entlang einer Längsachse L erstreckt und an seiner Rückseite eine im Querschnitt konkave gewölbte Anlegeplatte 12 aufweist. Der Träger 11 kann mit Hilfe einer Befestigungseinrichtung in Form mehrerer Befestigungsöffnungen 13 zum Durchführen von Schrauben und mehrerer seitlicher Schlitze 14 zum Durchführen eines jeweiligen Befestigungsbands an einem Rohrabschnitt R eines Zweirads (Fig. 1) befestigt werden. In Höhe der Schlitze 14 sind an dem Träger 11 bzw. der Anlegeplatte 12 flexible seitlich abkragende Führungslaschen 16 für das jeweilige Befestigungsband vorgesehen. An seiner in Fig 2 gezeigten Vorderseite erstreckt sich der Träger 11 entlang einer Trägerebene T (vgl. Fig. 3).

Die Halterung besitzt einen Aufnahmebereich 15, in welchem sich bei Verwendung das Zweirad-Schloss 61 befindet (vgl. Fig. 5). Der Aufnahmebereich 15 ist dabei parallel zu der Längsachse L des Trägers 11 ausgerichtet und rückseitig durch die Vorderseite bzw. die Trägerebene T des Trägers 11 begrenzt, wobei eine der Breitseiten des im Wesentlichen quaderförmigen Zweirad-Schlosses 61 im aufgenommenen Zustand dem Träger 11 und somit dem Rohrabschnitt zugewandt ist.

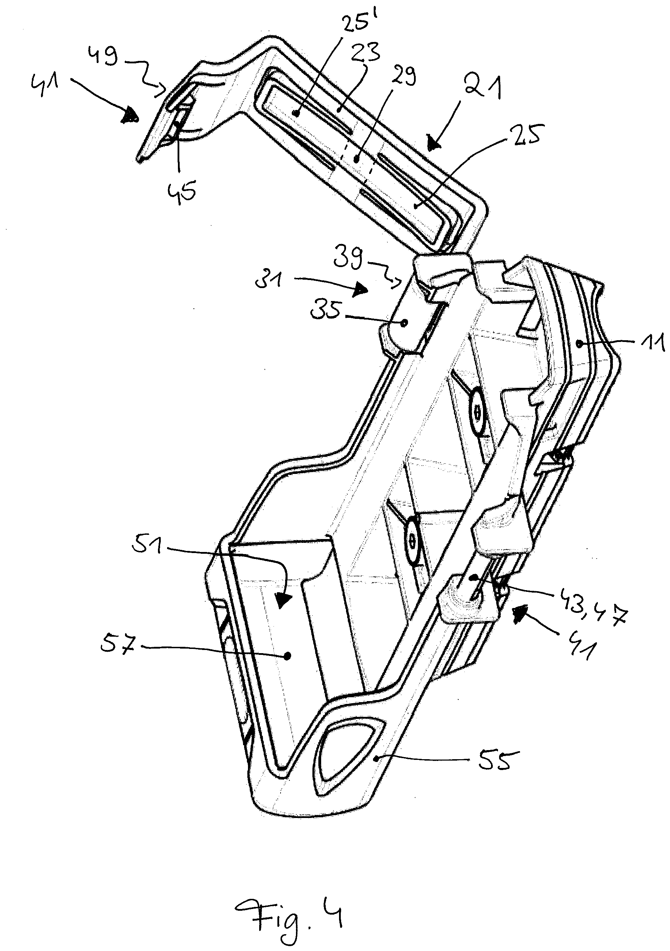

Im oberen Drittel der Halterung ist ein Fixierbügel 21 schwenkbar an dem Träger 11 gelagert. Der Fixierbügel 21 ist zwischen einer Offenstellung (Fig. 4) und einer Geschlossenstellung (Fig. 1 bis 3 und 5) frei beweglich. Der Fixierbügel 21 ist im Wesentlichen U-förmig, mit einem Basisabschnitt 23, der quer zu der Längsachse L des Trägers ausgerichtet und zwischen zwei Schenkelabschnitten 24, 24' angeordnet ist. Der Fixierbügel 21 erstreckt sich insgesamt entlang einer Erstreckungsrichtung E, die senkrecht zu der Längsachse L des Trägers 11 ausgerichtet ist. Der Basisabschnitt 23 ist bezüglich des Aufnahmebereichs 15 für das Zweirad-Schloss 61 leicht konvex gewölbt und erstreckt sich im Wesentlichen entlang einer Ebene F, die parallel versetzt zu der Trägerebene T des Trägers 11 verläuft (vgl. Fig. 3). Im geschlossenen Zustand (Fig. 1) umschließt der Fixierbügel 21 den Aufnahmebereich 15 für das Zweirad-Schloss 61 U-förmig. Der Fixierbügel 21 ist im Wesentlichen formstabil ausgebildet, wobei die einzelnen Abschnitte 23, 24, 24' des Fixierbügels 21 senkrecht zu ihrer jeweiligen Erstreckungsrichtung und insbesondere an ihren gegenseitigen Verbindungsstellen, nicht jedoch entlang ihrer jeweiligen Erstreckungsrichtung elastisch sind. Somit ist die U-Form des Fixierbügels 21 insgesamt elastisch.

Der Basisabschnitt 23 des Fixierbügels 21 ist bei dem hier gezeigten Ausführungsbeispiel rahmenförmig. Innerhalb des rahmenförmigen Basisabschnitts 23 befinden sich zwei rückfedernde Federabschnitte 25, 25', welche integral mit dem Basisabschnitt 23 gebildet sind und aufgrund einer jeweiligen U-förmigen Freistellung 27 nur über einen gemeinsamen mittigen Stegabschnitt 29 mit dem Basisabschnitt 23 des Fixierbügels 21 verbunden sind. Die zwei Federabschnitte 25, 25' weisen in zueinander entgegengesetzte Richtungen von dem Stegabschnitt 29 weg und sind bezüglich der Erstreckungsebene F des Basisabschnitts 23 des Fixierbügels 21 leicht schräg ausgerichtet, so dass die Federabschnitte 25, 25' in den Aufnahmebereich 15 für das Zweirad-Schloss 61 hineinragen.

Wie vor allem in den Fig. 2 bis 4 ersichtlich ist, ist der Fixierbügel 21 mit Hilfe eines Scharniers 31 am Träger 11 befestigt. Das Scharnier 31 umfasst einen Scharnierstift 33 des Trägers 11 und eine den Scharnierstift 33 teilumfänglich umgreifende Scharnierklammer 35 des Fixierbügels 21. Durch das Scharnier 31 ist es möglich, den Fixierbügel 21 um eine Schwenkachse S zwischen der Offenstellung und der Geschlossenstellung abgesehen von Reibungskräften im Wesentlichen kräftefrei zu schwenken.

An der dem Scharnier 31 gegenüber liegenden Seite weist der Träger 11 eine Rasteinrichtung 41 auf. Die Rasteinrichtung 41 umfasst einen Raststeg 43 des Trägers 11 und eine an dem Raststeg 43 verrastbare Rastnase 45 des Fixierbügels 21 (Fig. 4). Das freie Ende des Fixierbügels 21 kann mit Hilfe der Rasteinrichtung 41 in der Geschlossenstellung an dem Träger 11 lösbar fixiert werden.

Im unteren Bereich weist der Träger 11 eine Lagerschale 51 auf, die an ihrer Vorderseite 53 tief ausgeschnitten ist, während zwei Seitenwände 55 relativ zu der Vorderseite 53 weit nach oben reichen. Der Boden der genannten Lagerschale 51 bildet ein Stützelement 57.

Was die Benutzung der in Fig. 1 bis 5 gezeigten Halterung betrifft, so kann das Zweirad-Schloss 61 in den Aufnahmebereich 15 eingesetzt werden, wenn der Fixierbügel 21 sich in der Offenstellung befindet (Fig. 4). Dies kann aufgrund der tief ausgeschnitten Vorderseite 53 der Lagerschale 51 auf einfache Weise von vorne geschehen. Das Stützelement 57 (Boden der Lagerschale 51) dient hierbei zum unterseitigen Abstützen des Zweirad-Schlosses 61 entlang der Längsachse L.

Durch nachfolgendes Schwenken des Fixierbügels 21 um die Schwenkachse S kann der Fixierbügel 21 in die Geschlossenenstellung gebracht werden; diese wird durch ein Einrasten des Fixierbügels 21 mittels der Rasteinrichtung 41 fixiert. Das Zweirad-Schloss 61 ist somit in dem Aufnahmebereich 15 der Halterung umfänglich gefangen (Fig. 5).

Durch die an dem Fixierbügel 21 angeformten rückfedernden und zum Aufnahmebereich 15 abgewinkelten Federabschnitte 25; 25' wird in der Geschlossenstellung des Fixierbügels 21 ergänzend zu der Eigenelastizität des leicht konvex gewölbten Basisabschnitts 23 des Fixierbügels 21 eine Andruckkraft auf das im Aufnahmebereich 15 befindliche Zweirad-Schloss 61 erzeugt, welche das Zweirad-Schloss 61 fest fixiert und vor einem Verrutschen bewahrt. Hierdurch wird ein etwaiges Spiel des Zweirad-Schlosses 61 zwischen dem Träger 11 und dem Fixierbügel 21 beseitigt, und unerwünschte Bewegungen des Zweirad-Schlosses 61 im Aufnahmebereich 15, die zu Verschleiß oder Geräuschbildung führen könnten, werden unterbunden. Gleichwohl kann der Fixierbügel 21 auf komfortable Weise und insbesondere einhändig durch Verschwenken und Einrasten geschlossen werden, wobei lediglich beim endgültigen Schließen bzw. Arretieren des Fixierbügels 21 ein gewisser Kraftaufwand erforderlich ist, um die Federabschnitte 25, 25' zu spannen und die Rasteinrichtung 41 zu schließen.

Wenn das Zweirad-Schloss 61 in dem Aufnahmebereich 15 der Halterung aufgenommen ist und der Fixierbügel 21 geschlossen ist, sorgen die beiden relativ hohen Seitenwände 53 der Lagerschale 51 für eine hohe seitliche Stabilität des gehaltenen Zweirad-Schlosses 61.

Ein weiterer Vorteil der gezeigten Halterung besteht in der Vertauschbarkeit der Betätigungsrichtung des Fixierbügels 21. Der Scharnierstift 33 des Scharniers 31 und der Raststeg 43 der Rasteinrichtung 41 sind gleichartig ausgebildet. Der Scharnierstift 33 kann somit als erster Verbindungsabschnitt 37 des Trägers 11 angesehen werden, und der Raststeg 43 kann als zweiter Verbindungsabschnitt 47 des Trägers 11 angesehen werden. Das die Scharnierklammer 35 aufweisende Ende des Fixierbügels 21 kann als Scharnierende 39 bezeichnet werden, während das die Rastnase 45 aufweisende Ende des Fixierbügels 21 als Verschlussende 49 bezeichnet werden kann. In der Offenstellung kann der Fixierbügel 21 durch die Trennung von Scharnierstift 33 und Scharnierklammer 35 vom Träger 11 entfernt werden und in einer in der Ebene F (Fig. 3) um 180° gedrehten Ausrichtung wieder an dem Träger 11 befestigt werden, so dass das Scharnierende 39 des Fixierbügels 21 nun an dem zweiten Verbindungsabschnitt 47 des Trägers 21 angelenkt ist. Der Fixierbügel 21 schwenkt nun um die Schwenkachse S'. Um den Fixierbügel 21 in der Geschlossenstellung zu arretieren, wird das Verschlussende 45 des Fixierbügels 21 an dem ersten Verbindungsabschnitt 37 des Trägers 11 verrastet. Aufgrund der symmetrisch angeordneten gleichartigen Verbindungsabschnitte 37, 47 kann auf diese Weise also die Öffnungs- und Schließrichtung des Fixierbügels 21 vertauscht werden.

In einer weiteren, nicht dargestellten Ausführungsform ist es möglich, dass der oder die Federabschnitt(e) 25 (abgesehen von einer gewissen Schrägstellung in Richtung des Aufnahmebereichs 15) zumindest im Wesentlichen parallel zu der Längsachse L des Trägers ausgerichtet ist/sind und sich über einen Teil (insbesondere mehr als die Hälfte) der Breite oder nahezu die gesamte Breite des Fixierbügels (insbesondere des genannten Basisabschnitts 23) erstreckt/erstrecken. Der oder die Federabschnitt(e) 25 kann/können wiederum teilumfängliche Freistellungen aufweisen, so dass der oder die Federabschnitt(e) in einer Richtung rückfedernd ausgebildet ist/sind, die quer (vorzugsweise senkrecht) zu der Erstreckungsrichtung des jeweiligen Federabschnitts verläuft. Bei einer derartigen Erstreckung über einen Teil der Breite des Fixierbügels kann der jeweilige Federabschnitt an mehreren oder sogar sämtlichen Gelenkstäben des Zweirad-Schlosses 61 anliegen, um das Zweirad-Schloss 61 in dem Aufnahmebereich 15 festzulegen und insbesondere auch eine Rüttelbewegung der einzelnen Gelenkstäbe relativ zueinander zu verhindern.

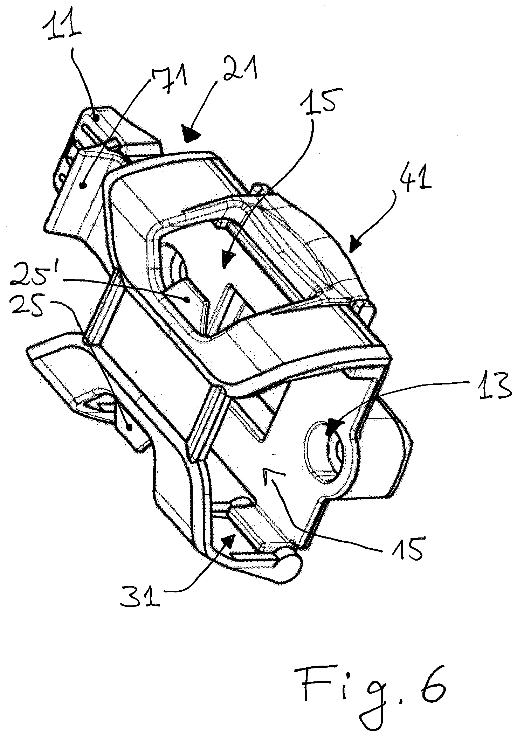

Fig. 6 zeigt eine weitere Ausführungsform einer Halterung für ein Zweirad-Schloss. Der Fixierbügel 21 ist hier im Wesentlichen X-förmig ausgebildet. Der Fixierbügel 21 weist wiederum in einem entlang der Längsachse L mittleren Bereich zwei Federabschnitte 25, 25' auf, welche integral mit dem Fixierbügel 21 gebildet sind und seitlich freistehend in zueinander entgegengesetzte Richtungen weisen, wobei die zwei Federabschnitte 25, 25' jedoch geringfügig in Richtung des Aufnahmebereichs 15 für das Zweirad-Schloss (in Fig. 6 nicht gezeigt) geneigt sind.

Ferner ist in Fig. 6 anstelle der Lagerschale 51 gemäß Fig. 1 bis 5 lediglich ein Stützelement 71 in einem oberen Bereich des Trägers 11 vorgesehen, das von dem Träger 11 in Richtung des Aufnahmebereichs 15 für das Zweirad-Schloss abkragt. Das Stützelement 71 weist die Form eines Aufliegestegs auf, der sich im Wesentlichen entlang einer Orthogonalebene zu der Längsachse L erstreckt und sich jedoch zu seinem freien Ende hin verjüngt. Das Stützelement 71 ist dazu ausgebildet ist, in eine Aussparung des Zweirad-Schlosses einzugreifen, die zwischen dem Schlosskörper und dem Gelenkstabbügel gebildet ist.

Bei den vorstehend beschriebenen Ausführungsbeispielen wird aufgrund des leichten Öffnens und Schließens des frei schwenkbaren Fixierbügels 21 eine einfache, intuitive und insbesondere einhändige Handhabung der Zweirad-Schloss-Halterung ermöglicht. Insbesondere durch die rückfedernden Federabschnitte 25, 25' wird eine feste Fixierung eines Zweirad-Schlosses 61 innerhalb des Aufnahmebereichs 15 der Halterung erreicht. Durch die Möglichkeit des Vertauschens der Öffnungs- und Schließrichtung bei der Ausführungsform gemäß Fig. 1 bis 5 ist die Halterung sowohl für Links- als auch Rechtshänder bzw. für verschiedene Parkpositionen mit unterschiedlicher Zugänglichkeit der Halterung geeignet.

### Bezugszeichenliste

- 11: Träger
- 12: Anlegeplatte
- 13: Befestigungsöffnung
- 14: Schlitz
- 15: Aufnahmebereich
- 16: Führungslasche
- 21: Fixierbügel
- 23: rahmenförmiger Basisabschnitt
- 24, 24': Schenkelabschnitt
- 25, 25': Federabschnitt
- 27: Freistellung
- 29: Stegabschnitt
- 31: Scharnier
- 33: Scharnierstift
- 35: Scharnierklammer
- 37: erster Verbindungsabschnitt
- 39: Scharnierende
- 41: Rasteinrichtung
- 43: Raststeg
- 45: Rastnase
- 47: zweiter Verbindungsabschnitt
- 49: Verschlussende
- 51: Lagerschale
- 53: Vorderseite
- 55: Seitenwand
- 57: Stützelement
- 61: Zweirad-Schloss
- 71: Stützelement
- F: Erstreckungsebene des Basisabschnitts des Fixierbügels
- L: Längsachse des Trägers
- R: Rohrabschnitt des Zweirads
- E: Erstreckungsrichtung des Fixierbügels
- S, S': Schwenkachse
- T: Erstreckungsebene der Vorderseite des Trägers

## Patentansprüche

1. Halterung für ein Zweirad-Schloss (61) vom Typ eines Faltschlosses, mit einem Träger (11), der sich entlang einer Längsachse (L) erstreckt und eine Befestigungseinrichtung (13, 14, 16) zur Befestigung des Trägers (11) an einem Rohrabschnitt (R) eines Zweirads aufweist, wobei der Träger (11) einen Aufnahmebereich (15) zum Aufnehmen des Zweirad-Schlosses (61) begrenzt, und
einem Fixierbügel (21), der an dem Träger (11) zwischen einer Offenstellung und einer Geschlossenstellung schwenkbar gelagert ist, wobei der Fixierbügel (21) dazu ausgebildet ist, in der Geschlossenstellung das Zweirad-Schloss in dem Aufnahmebereich (15) festzulegen,
**dadurch gekennzeichnet,**
**dass** der Fixierbügel (21) wenigstens einen Federabschnitt (25, 25') aufweist, der dazu ausgebildet ist, in der Geschlossenstellung des Fixierbügels (21) eine Andruckkraft auf das Schloss (61) auszuüben.

2. Halterung nach Anspruch 1,
wobei der Fixierbügel (21) quer zu der Längsachse (L) des Trägers ausgerichtet ist.

3. Halterung nach einem der vorhergehenden Ansprüche,
wobei der Federabschnitt (25, 25') rückfedernd ausgebildet ist.

4. Halterung nach einem der vorhergehenden Ansprüche,
wobei der Federabschnitt (25, 25') bezüglich der Erstreckungsrichtung (E) des Fixierbügels (21) schräg ausgerichtet ist.

5. Halterung nach einem der vorhergehenden Ansprüche,
wobei der Federabschnitt (25, 25') an dem Fixierbügel (21) integral ausgebildet ist;
und/oder
wobei der Federabschnitt (25, 25') durch eine mehrseitige Freistellung (27) an dem Fixierbügel (21) ausgebildet ist.

6. Halterung nach einem der vorhergehenden Ansprüche,
wobei der Fixierbügel (21) zwei Federabschnitte (25, 25') aufweist, wobei die zwei Federabschnitte (25, 25') vorzugsweise in zueinander zumindest im Wesentlichen entgegengesetzte Richtungen weisen.

7. Halterung nach einem der vorhergehenden Ansprüche,
wobei der Fixierbügel (21) senkrecht zu seiner Erstreckungsrichtung (E), nicht jedoch entlang seiner jeweiligen Erstreckungsrichtung (E) elastisch ist.

8. Halterung nach einem der vorhergehenden Ansprüche,
wobei der Fixierbügel (21) oder ein Teil des Fixierbügels (21) bezüglich des Aufnahmebereichs (15) für das Zweirad-Schloss (61) konvex gewölbt ist; und/oder
wobei der Fixierbügel (21) in der Geschlossenstellung den Aufnahmebereich (15) für das Zweirad-Schloss (61) umfänglich schließt; und/oder
wobei der Fixierbügel (21) im Wesentlichen U-förmig ist.

9. Halterung nach einem der vorhergehenden Ansprüche,
wobei der Fixierbügel (21) zumindest im Wesentlichen formstabil ausgebildet ist.

10. Halterung nach einem der vorhergehenden Ansprüche,
wobei der Fixierbügel (21) mittels wenigstens eines Scharniers (31) an dem Träger (11) schwenkbar gelagert ist;
und/oder
wobei der Fixierbügel (21) um eine Schwenkachse (S) schwenkbar ist, die parallel zu der Längsachse (L) des Trägers (11) verläuft.

11. Halterung nach einem der vorhergehenden Ansprüche,
wobei der Fixierbügel (21) ein freies Ende aufweist, das mittels einer Rasteinrichtung (41) an dem Träger (11) einrastbar ist.

12. Halterung nach einem der vorhergehenden Ansprüche,
wobei der Fixierbügel (21) wenigstens ein Scharnierende (39) und ein Verschlussende (49) aufweist, wobei der Träger (11) beiderseits des Aufnahmebereichs (15) für das Zweirad-Schloss (61) einen ersten Verbindungsabschnitt (37) und einen zu dem ersten Verbindungsabschnitt (37) gleichartigen zweiten Verbindungsabschnitt (47) aufweist, wobei der Fixierbügel (21) wahlweise in einer ersten Konfiguration oder in einer zweiten Konfiguration an dem Träger (11) befestigbar ist, wobei in der ersten Konfiguration das Scharnierende (39) des Fixierbügels (21) an dem ersten Verbindungsabschnitt (37) des Trägers (11) befestigt ist und das Verschlussende (49) an dem zweiten Verbindungsabschnitt (37) arretierbar ist, und wobei in der zweiten Konfiguration das Scharnierende (39) des Fixierbügels (21) an dem zweiten Verbindungsabschnitt (47) des Trägers (11) befestigt ist und das Verschlussende (49) an dem ersten Verbindungsabschnitt (37) arretierbar ist.

13. Halterung nach einem der vorhergehenden Ansprüche,
wobei der Träger (11) ein Stützelement (57) aufweist, das dazu ausgebildet ist, das in dem Aufnahmebereich(15) aufgenommene Zweirad-Schloss (61) gegen eine Bewegung entlang der Längsachse (L) des Trägers (11) abzustützen.

14. Halterung nach Anspruch 13,
wobei das Stützelement (57) bezüglich der Längsachse (L) des Trägers (11) seitlich absteht, um das Zweirad-Schloss (61) an einer Stirnseite abzustützen oder um in eine Aussparung des Zweirad-Schlosses (61) einzugreifen;
und/oder
wobei das Stützelement (57) mit dem Träger (11) zumindest im Wesentlichen starr verbunden ist.

15. Schlossanordnung mit einer Halterung nach einem der vorhergehenden Ansprüche und mit einem Zweirad-Schloss (61) vom Typ eines Faltschlosses, wobei das Zweirad-Schloss (61) einen Schlosskörper und einen daran befestigten Gelenkstabbügel aufweist, welcher mehrere schwenkbar miteinander verbundene Gelenkstäbe aufweist, die zu einer achsparallelen Anordnung zusammenfaltbar sind.
